# EUROPÄISCHE PATENTSCHRIFT

(11) **EP 1 092 115 B1**
(45) Veröffentlichungstag und Bekanntmachung des Hinweises auf die Patenterteilung: **12.12.2001**
(21) Anmeldenummer: 99939906.6
(22) Anmeldetag: 31.05.1999
(51) Int. Cl.: F24C 15/34, F22B 27/00, A21B 3/04

(54) **GARGERÄT MIT ENERGIESPEICHER- UND ENERGIEENTNAHMESYSTEM**
COOKING DEVICE WITH ENERGY STORAGE AND EXTRACTION SYSTEM
APPAREIL DE CUISSON A SYSTEME D'ACCUMULATION ET DE PRELEVEMENT D'ENERGIE

(30) Priorität: 29.05.1998 DE 19824172
(43) Veröffentlichungstag der Anmeldung: 18.04.2001
(73) Patentinhaber: Rational AG, 86899 Landsberg (DE)
(72) Erfinder: WIEDEMANN, Peter, D-86830 Klosterlechfeld (DE); KOHLSTRUNG, Peter, D-86916 Kaufering (DE)
(74) Vertreter: Weber-Bruls, Dorothée, Dr.
(86) Internationale Anmeldenummer: DE9901668
(87) Internationale Veröffentlichungsnummer: WO9963277

(56) Entgegenhaltungen:
- DE-A- 2 229 939
- DE-A- 2 334 285
- DE-A- 4 106 348

## Beschreibung

Die Erfindung betrifft ein Gargerät, mit einem Garraum, einer Heizung, einem Umwälzsystem, einem Energiespeicher- und Energieentnahmesystem und einem Meß- und Regelsystem, verbunden mit der Heizung, dem Umwälzsystem und dem Energiespeicher- und Energieentnahmesystem.

Herkömmliche Gargeräte sind meist unökonomisch, insoweit ihre Komponenten mit extern zugeführter Energie betrieben werden.

Beispielsweise die DE 197 57 415 C1 offenbart ein Gargerät mit Wärmerückführung, bei dem eine Heizwärmeübertragung von einem Wärmeträgerfluid zur Abgabe von Wärme an das Garmedium des Gargeräts durchströmt wird und die Temperatur des Wärmeträgerfluids durch Verdichten stromaufwärts des Heizwärmeübetragers, gegebenenfalls unter Vorschaltung einer Vorwärmeeinrichtung, erhöht wird.

Die DE 23 34 285 A1 offenbart ein gattungsgemäßes Gargerät mit einem Wärmespeicher, dem gespeicherte Wärmeenergie zu gewünschten Zeiten begrenzter Dauer entnommen und an einen Gar-Luftstrom abgegeben werden kann. Dabei wird ein monolithischer Wärmespeicherblock verwendet, der sich nur schlecht in ein Gargerät integrieren läßt, zu Rissen neigt, meist auch schlechte thermodynamischer Eigenschaften aufweist und nicht in der Lage ist, zufriedenstellend hohe sowie niedrige Temperaturbereiche abzudecken.

Aus der DE 2 229 939 A1 ist ein aus einzelnen Formsteinen aufgebauter Wärmespeicher für ein Gargerät bekannt, durch den zurnindest ein Teil des ein Nahrungsmittel thermisch aufbereitenden Luftstroms durchblasbar ist.

Ein Latentwärmespeichermittel als Teil eines Kondensators eines Gargeräts ist aus der DE 41 06 348 A1 bekannt.

Es ist die Aufgabe der gegenwärtigen Erfindung, das gattungsgemäße Gargerät derart weiterzuentwickeln, daß es die Nachteile des Stands der Technik überwindet, insbesondere eine optirnierte Energieregelung für einen großen Temperaturbereich ermöglicht.

Diese Aufgabe wird erfindungsgemäß dadurch gelöst, daß das Energiespeicher- und Entnahmesystem zumindest einen ersten Energiespeicher zur Aufnahme eines ersten Materials, das zur Wärmespeicherung geeignet ist und/oder bei einer Phasenumwandlung latente Wärme verbraucht oder freisetzt, und zumindest einen zweiten Energiespeicher zur Aufnahme eines zweiten Materials, das zur Kältespeicherung geeignet ist, umfaßt und induktiv, resistiv und/oder konvektiv mit Wärme- und/oder Kälteenergie aufladbar ist.

Weiterhin kann vorgesehen sein, daß der erste Energiespeicher über eine Heizung, vorzugsweise in Galphasen, die keine oder wenig Energie benötigen, und/oder Garpausen, und/oder über Abwärme, wie Wärme von Abluft, Kondensat, nicht kondensiertem Anteil eines Garmediums und/oder überschüssigem Dampf, mit Energie aufladbar ist.

Weiterhin kann vorgesehen sein, daß das erste Material ein Metall, ein Salz, ein Polymer, Wasser, Dampf und/oder überhitzten Dampf umfaßt.

Das zweite Material kann ein Metall, ein Salz, ein Polymer, Wasser und/oder Eisen umfassen.

Erfindungsgemäß bevorzugt ist, daß der erste und/oder zweite Energiespeicher des Energiespeicher- und Energieentnahmesystems platzsparend in einer isolierenden Haut des Gargeräts angeordnet ist, bzw. sind.

Weiterhin kann vorgesehen sein, daß die im Energiespeicher- und Energieentnahmesystem gespeicherte Energie in Form von thermischer, elektrischer und/oder mechanischer Energie im Gargerät, insbesondere zum zumindest teilweisen Betreiben der Heizung, des Umwälzsystems, einer Feuchtregelung, eines Dampferzeugers und/oder einer Abkühleinheit, unter Einsatz des Meß- und Regelsystems, nutzbar ist.

Ferner kann vorgesehen sein, daß dem Energiespeicher- und Energieentnahmesystem Energie konvektiv entnehmbar ist, insbesondere über zumindest eine Wärmeübertragungsfläche.

Ferner wird erfindungsgemäß vorgeschlagen, daß dem Energiespeicher- und Energieentnahmesystem Energie durch Drosselung und/oder Verdichtung, vorzugsweise eines als das erste Material vorhandenen Dampfes, Zugabe von Wasser und/oder Verdampfen von Wasser an heißen Wänden entnehmbar ist, insbesondere zum Verdampfen von Wasser und/oder zur Beheizung eines Garprozesses.

Auch wird erfindungsgemäß vorgeschlagen, daß dem Energiespeicher- und Energieentnahmesystem Energie durch Expansion und/oder Entspannung, vorzugsweise eines als das zweite Material vorhandenen Mediums, entnehmbar ist, insbesondere zum Kühlen des Garraums, Gefrieren von Gargut, vor und/oder nach dem Garen, und/oder Auskondensieren von Wrasen aus dem Garraum.

Schließlich wird eine bevorzugte erfindungsgemäße Weiterentwicklung vorgeschlagen, bei der das Meß- und Regelsystem sicherstellt, daß die Unterhaltung eines Garprozesses stets höchste Priorität genießt.

Der Erfindung liegt somit die überraschende Erkenntnis zugrunde, daß durch den Einbau eines Energiespeicher- und Energieentnahmesystems, das zumindest einen Wärmespeicher sowie zumindest einen Kältespeicher umfaßt und mit dem in einem herkömmlichen Gargerät bereits vorhandenen Meß- und Regelsystem verbunden ist, der Stromverbrauch durch geregeltes Betreiben einer Heizung, eines Dampfgenerators, eines Gebläses, einer Kühleinheit, einer Feuchtigkeitsregelungseinheit, etc. unter gleichzeitiger Nutzung von Abwärme und/oder Kälte durch kontrollierte und einfache Entnahme gespeicherter Energie reduziert werden kann, ohne daß herkömmliche Gargeräte umgebaut werden müssen.

Dabei kann ein Energiespeicher beispielsweise in Garpausen, wie sie im Falle eines Chargenbetriebs stets anfallen oder durch den Garablauf bedeckt sind, und/oder in aprioren Garphasen, in denen ein Galprozeß wenig oder keine Energie benötigt, mittels einer, gegebenenfalls zusätzlichen, Heizung, gesteuert über das Meß- und Regelsystem, nach einer Prioritätshierarchie zur Sicherstellung eines ungestörten Ablaufs eines Garprozesses, oder durch die Wärme aus dem Garraum austretender Abluft, bzw. austretenden überschüssigen Dampfes aufgeladen werden, um dann in hyperprioren Garphasen, in denen der Garprozeß viel Energie benötigt, mehr als die zum Heizen des Garguts installierte Heizung liefern kann, Energie aus dem Energiespeicher entnehmen zu können.

Garprozeße mit hohem Energieverbrauch können durch Verwendung eines erfindungsgemäßen Gargeräts zudem, insbesondere zu Anfang, beschleunigt werden. Ist der Energiespeicher, beispielsweise, mit 2 kWh bemessen und wird seine Energie in den ersten 10 Garminuten entnommen, ergibt dies einen Leistungszuwachs von 12 kW, d.h., daß dem Garprozeß bei einer Heizleistung von 9 kW in den ersten 10 Garminuten 21 kW zur Verfügung stehen.

Durch das Vorhandensein eines Wärmespeichers sowie eines Kältespeichers kann zudem auf energiesparende Weise ein garendes Gut gefroren, anschließend gegart und gegebenenfalls im (an)gegarten Zustand wieder eingefroren werden.

Auch kann Wärmeenergie in Kälte umgewandelt werden, um beispielsweise Wrasen aus dem Garraum auszukondensieren.

Weitere Merkmale und Vorteile der Erfindung ergeben sich aus der nachfolgenden Beschreibung, in der zwei Ausführungsbeispiele der Erfindung anhand von schematischen Zeichnungen im einzelnen erläutert sind. Dabei zeigt:
- Figur 1: eine Schnittansicht durch ein erfindungsgemäßes Gargerät mit einem Energiespeicher- und Energieentnahmesystem; und
- Figur 2: eine Schnittansicht durch ein alternatives Energiespeicher- und Energieentnahmesystem zur Verwendung in einem erfindungsgemäßen Gargerät.

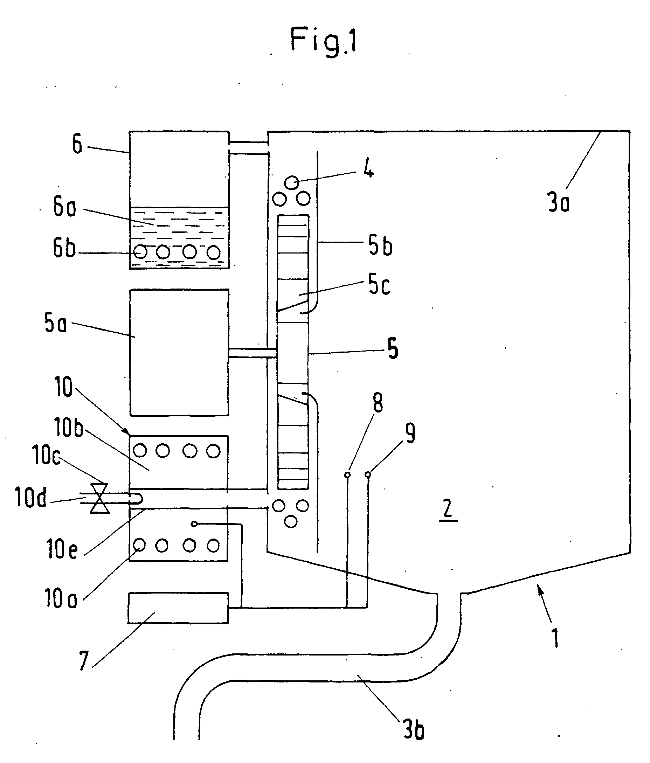

Wie Figur 1 zu entnehmen ist, umfaßt ein erfindungsgemäßes Gargerät 1 einen Garraum 2, begrenzt durch Wände 3a und verbunden mit einem Ablauf 3b, eine Heizung 4 für Gargut, ein Umwälzsystem 5 für Gargut, bestehend aus einem Motor 5a, einem Umwälzer 5b und einem Strömungsführer 5c, einen Dampferzeuger 6, zur Befeuchtung des Garguts, umfassend Wasser 6a und eine Heizung 6b, eine Regeleinrichtung 7, die mit der Heizung 4, dem Umwälzsystem 5, dem Dampferzeuger 6, einem Feuchtefühler 8, einem Temperaturfühler 9 sowie einem Energiespeicher- und Energieentnahmesystem 10 verbunden ist. Die Regeleinrichtung 7, die in konventionellen Gargeräten lediglich die Aufgabe hat, Feuchtigkeit sowie Temperatur des Garguts und Beschwadungszyklen zu regeln, verfügt erfindungsgemäß über einen zusätzlichen Regelkreis, der den Energiegehalt des Energiespeicher- und Energieentnahmesystems 10 regelt, wobei der verwendete Regelalgorithmus so gestaltet ist, daß die Unterhaltung des Garprozesses stets höchste Priorität genießt.

Das Energiespeicher- und Energieentnahmesystem 10 umfaßt dabei eine Heizung 10a und einen Energiespeicher 10b, der über ein Ventil 10c mit einer Wasserzufuhr 10d verbunden ist und eine Wärmeübertragungsfläche 10e umfaßt. Dabei ist sowohl die Heizung 10a als auch das Ventil 10c mit der Regeleinrichtung 7 zur gezielten Energieladung und Energieentnahme verbunden.

Das mit Bezug auf Figur 1 beschriebene Gargerät 1 arbeitet beispielsweise wie folgt:

In aprioren Garphasen, in denen ein Garprozeß nur wenig oder keine Energie benötigt, in Be- und Entladephasen des Gargeräts 1 und in ablaufbedingten Garpausen sorgt die Regeleinrichtung 7 dafür, daß die Heizung 10a den Energiespeicher 10b, der als Wärmespeicher fungiert, aufheizt.

In hyperprioren Garphasen, in den der Garprozeß extrem viel Energie benötigt, mehr als die im Garraum 2 installierte Heizung 4 zur Verfügung stellen kann, speist das Energiespeicher- und Energieentnahmesystem 10 Dampf zusätzlich in den Garraum 2 ein und reichert auf diese Weise das Garmedium mit Feuchte und Wärme an. Der Dampf wird dabei dadurch erzeugt, daß über die Wasserzufuhr 10d und das von der Regeleinrichtung 7 geöffnete Ventil 10c Wasser zugeführt wird, das bei Kontaktierung der Wärmeübertragungsfläche 10e verdampft.

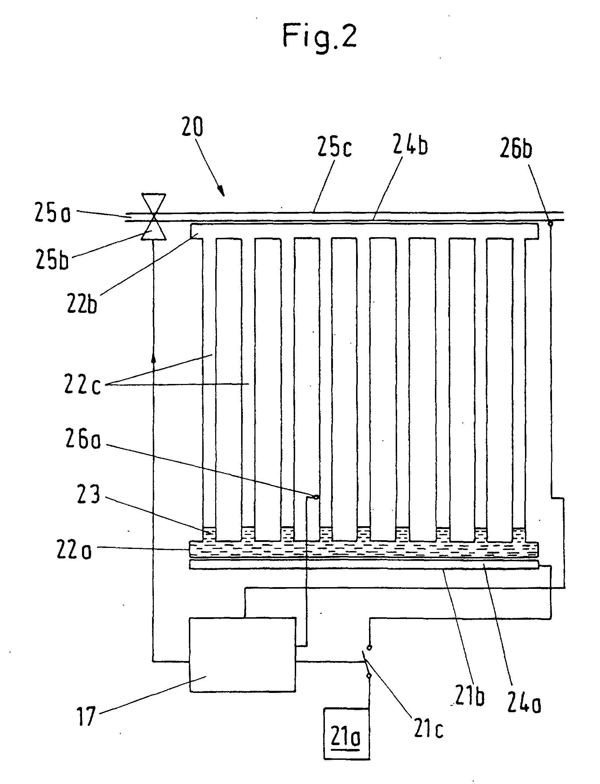

Das in Figur 2 dargestellte Energiespeicher- und Energieentnahmesystem 20 umfaßt eine über eine Stromquelle 21a heizbare Heizung 21b, wobei das Beheizen über eine Regeleinrichtung 17 und einen Schalter 21c regelbar ist. Der Energiespeicher an sich besteht aus zwei parallelen Verbindungsrohren 22a, 22b zwischen denen eine Vielzahl von Rohren 22c verlaufen, wobei das Rohrsystem 22a, 22b, 22c Wasser 23 hermetisch abgeschlossen in einer bestimmten Menge umfaßt. Zur Energieaufnahme ist zwischen der Heizung 21b und dem Rohrsystem, nämlich dem Verbindungsrohr 22a, ein Wärmeleiter 24a vorgesehen, und zur Wärmeabgabe ist ein weiterer Wärmeleiter 24b zwischen dem Rohrsystem, nämlich dem Verbindungsrohr 22b, und einer Wärmeübertragungsfläche 25c vorgesehen. Im Falle der Energieentnahme fließt Wasser über die Wärmeübertragungsfläche 25c, das über eine Wasserzufuhr 25a und ein Ventil 25b zuführbar ist. Außerdem sind Temperaturfühler vorgesehen, nämlich ein Temperaturfühler 26a für den Energiespeicher und ein Temperaturfühler 26b für den Entnahmedampf.

Das mit Bezug auf Figur 2 beschriebene Energiespeicher- und Energieentnahmesystem arbeitet wie folgt:

Die Regeleinrichtung 17 regelt den Energie- beziehungsweise Wärmegehalt des Energiespeichers, nämlich ein Aufheizen des Wassers 23 im Rohrsystem 22a, 22b, 22c, durch Schalten des Schalters 21c und die Energie- beziehungsweise Wärmeabgabe, nämlich eine Dampferzeugung, über das Ventil 25b. Diese Regelung geschieht unter Berücksichtigung des Garprozesses, dessen Unterhaltung stets Priorität hat, und der Temperatur in dem Rohrsystem 22a, 22b, 22c sowie der Temperatur des erzeugten Dampfes, gemessen über die Temperaturfühler 26a und 26b.

Das Rohrsystem 22a, 22b, 22c kann äußerst platzsparend in einer nicht gezeigten, isolierenden Haut eines Gargeräts untergebracht werden, wobei die Energieentnahme durch ein verschweißtes Parallelrohr ermöglicht wird.

## Patentansprüche

1. Gargerät (1), mit einem Garraum (2), einer Heizung (4), einem Umwälzsystem (5), einem Energiespeicher- und Energieentnahmesystem (10, 20) und einem Meß- und Regelsystem (7, 8, 9, 17, 26a, 26b), verbunden mit der Heizung (4), dem Umwälzsystem (5) und dem Energiespeicher- und Energieentnahmesystem (10, 20), **dadurch gekennzeichnet, daß** das Energiespeicher- und Entnahmesystem (10, 20) zumindest einen ersten Energiespeicher (10a, 22a, 22b, 22c, 23) zur Aufnahme eines ersten Materials (23), das zur Wärmespeicherung geeignet ist und/oder bei einer Phasenumwandlung latente Wärme verbraucht oder freisetzt, und zumindest einen zweiten Energiespeicher zur Aufnahme eines zweiten Materials umfaßt, das zur Kältespeicherung geeignet ist, umfaßt und induktiv, resistiv und/oder konvektiv mit Wärme- und/oder Kälteenergie aufladbar ist.

2. Gargerät nach Anspruch 1, **dadurch gekennzeichnet, daß**
der erste Energiespeicher (10a, 22a, 22b, 22c, 23) über eine Heizung (10a, 21b), vorzugsweise in Garphasen, die keine oder wenig Energie benötigen, und/oder Garpausen, und/oder über Abwärme, wie Wärme von Abluft, Kondensat, nicht kondensierten Anteil eines Garmediums und/oder überschüssigen Dampf, mit Energie aufladbar ist.

3. Gargerät nach Anspruch 1 oder 2, **dadurch gekennzeichnet, daß**
das erste Material ein Metall, ein Salz, ein Polymer, Wasser (23), Dampf und/oder überhitzten Dampf umfaßt.

4. Gargerät nach Anspruch 1 oder 2, **dadurch gekennzeichnet, daß**
das zweite Material ein Metall, ein Salz, ein Polymer, Wasser und/oder Eisen umfaßt.

5. Gargerät nach einem der vorangehenden Ansprüche, **dadurch gekennzeichnet, daß** der erste und/oder zweite Energiespeicher (10a, 22a, 22b, 22c, 23) des Energiespeicher- und Energieentnahmesystems (10, 20) platzsparend in einer isolierenden Haut des Gargeräts (1) angeordnet ist bzw. sind.

6. Gargerät nach einem der vorangehenden Ansprüche, **dadurch gekennzeichnet, daß** die im Energiespeicher- und Energieentnahmesystem (10, 20) gespeicherte Energie in Form von thermischer, elektrischer und/oder mechanischer Energie im Gargerät, insbesondere zum zumindest teilweisen Betreiben der Heizung (4), des Umwälzsystems (5), einer Feuchtregelung, eines Dampferzeugers (6) und/oder einer Abkühleinheit, unter Einsatz des Meß- und Regelsystems (7, 8, 9, 17, 26a, 26b), nutzbar ist.

7. Gargerät nach einem der vorangehenden Ansprüche, **dadurch gekennzeichnet, daß** dem Energiespeicher- und Energieentnahmesystem (10, 20) Energie konvektiv entnehmbar ist, insbesondere über zumindest eine Wärmeübertragungsfläche (10e, 25c).

8. Gargerät nach einem der vorangehenden Ansprüche, **dadurch gekennzeichnet, daß** dem Energiespeicher- und Energieentnahmesystem (10, 20) Energie durch Drosselung und/oder Verdichtung, vorzugsweise eines als das erste Material vorhandenen Dampfes, Zugabe von Wasser und/oder Verdampfen von Wasser an heißen Wänden entnehmbar ist, insbesondere zum Verdampfen von Wasser und/oder zur Beheizung eines Garprozesses.

9. Gargerät nach einem der vorangehenden Ansprüche, **dadurch gekennzeichnet, daß** dem Energiespeicher- und Energieentnahmesystem (10, 20) Energie durch Expansion und/oder Entspannung, vorzugsweise eines als das zweite Material vorhandenen Mediums, entnehmbar ist, insbesondere zum Kühlen des Garraums, Gefrieren von Gargut, vor und/oder nach dem Garen, und/oder Auskondensieren von Wrasen aus dem Garraum.

10. Gargerät nach einem der vorangehenden Ansprüche, **dadurch gekennzeichnet, daß** das Meß- und Regelsystem (7, 8, 9, 17, 26a, 26b) sicherstellt, daß die Unterhaltung eines Garprozesses stets höchste Priorität genießt.

## Claims

1. A cooking device (1) comprising a cooking chamber (2), a heating device (4), a circulating system (5), an energy storage and extraction system (10, 20) and a measuring and regulating system (7, 8, 9, 17, 26a, 26b), connected to heating device (4), the circulating system (5) and the energy storage and extraction system (10, 20), **characterised in that** the energy storage and extraction system (10, 20) comprises at least one first energy store (10a, 22a, 22b, 22c, 23) to receive a first marerial (23) which is suitable for heat storage and/or consumes or liberates latent heat during a phase transition, and at least one second energy store to receive a second material which is suitable for cold storage and is chargeable inductively, resistively, and/or convectively with heat energy and/or cold energy.

2. A cooking device according to claim 1, **characterised in that** the first energy store (10a, 22a, 22b, 22c, 23) is chargeable with energy via a heating device (10a. 21b), preferably in cooking phases which require little or no energy, and/or cooking intervals, and/or via waste heat, such as heat from outgoing air, condensate, non-condensed component of a cooking medium and/or excess steam.

3. A cooking device according to claim 1 or 2, **characterised in that** the first material comprises a metal, a sale, a polymer, water (23), steam and/or superheated steam.

4. A cooking device according to claim 1 or 2, **characterised in that** the second material comprises a metal, a salt, a polymer, water and/or iron.

5. A cooking device according to any one of the preceding claims, **characterised in that** the first and/or second energy store (10a, 22a, 22b, 22c, 23) of the energy storage and extraction system (10, 20) is/are disposed in an insulating skin of the cooking device (1) so as to save space.

6. A cooking device according to any one of the preceding claims, **characterised in that** the energy stored in the energy storage and extraction system (10, 20) is usable in the form of thermal, electrical and/or mechanical energy in the cooking device, particularly for at least partially operating the heating device (4), the circulating system (5), a moisture regulating system, a steam generator (6) and/or a cooling unit, with the use of the measuring and regulating system (7, 8, 9, 17, 25a, 26b).

7. A cooking device according to any one of the preceding claims, **characterised in that** energy can be extracted convactively from the energy storage and extraction system (10, 20), particularly via at least one heat transfer surface (10c, 25c).

8. A cooking device according to any one of the preceding claims, **characterised in that** energy can be extracted from the energy storage and extraction system (10, 20) by throttling and/or compression, preferably of a steam present as the first material, the addition of water and/or evaporation of water on hot walls, particularly for the evaporation of water and/or for heating a cooking process.

9. A cooking device according to any one of the preceding claims, **characterised in that** energy can be extracted from the energy storage and extraction system (10, 20) by expansion and/or relaxation, preferably of a medium present as the second material, particularly for cooling the cooking chamber, freezing cooking ingredients, before and/or after cooking, and/or condensing out vapours from the cooking chamber.

10. A cooking device according to any one of the preceding claims, **characterised in that** the measuring and regulating system (7, 8, 9, 17, 26a, 26b) ensures that the maintenance of a cooking process always enjoys the highest priority.

## Revendications

1. Appareil de cuisson (1) comprenant un compartiment de cuisson (2), un chauffage (4), un système de circulation (5) un système d'accumulation et de prélèvement d'énergie (10, 20) et un système de mesure et de réglage (7, 8, 9, 17, 26a, 26b), relié au chauffage (4), au système de circulation (5) et au système d'accumulation et de prélèvement d'énergie (10, 20), **caractérisé en ce que** le système d'accumulation et de prélèvement d'énergie (10, 20) englobe au moins un premier accumulateur d'énergie (10a, 22a, 22b, 22c, 23) pour la réception d'un premier matériau (23 a,) qui est adapté pour accumuler de la chaleur et/ou qui utilise ou qui restitue de la chaleur latente lors d'une transition de phase et au moins un second accumulateur d'énergie pour la réception d'un second matériau, adapté pour accumuler le froid et **en ce qu'**il peut être chargé en énergie calorifique ou frigorifique, par induction, résistivité, ou convection.

2. Appareil de cuisson selon la revendication 1, **caractérisé en ce que** le premier accumulateur d'énergie (10a, 22a , 22b, 22c et 23) peut être chargé en énergie par l'intermédiaire d'un chauffage (10a, 21b), de préférence pendant les phases de cuisson, qui nécessitent peu ou pas d'énergie et/ou pendant les arrêts de cuisson, et/ou par l'intermédiaire de chaleur perdue, comme la chaleur de l'air d'évacuation, des condensats, de la fraction non condensée d'un agent de cuisson et/ou par la vapeur excédentaire.

3. Appareil de cuisson selon l'une quelconque des revendications 1 ou 2, **caractérisé en ce que** le premier matériau englobe un métal, un sel, un polymère, de l'eau (23), de la vapeur et/ou de la vapeur surchauffée.

4. Appareil de cuisson selon l'une quelconque des revendications 1 ou 2, **caractérisé en ce que** le second matériau englobe un métal, un sel, un polymère, de l'eau et/ou du fer.

5. Appareil de cuisson selon l'une quelconque des revendications précédentes, **caractérisé en ce que** le premier et/ou le second accumulateur d'énergie (10a, 22a, 22b, 22c, 23) du système d'accumulation et de prélèvement d'énergie (10, 20) est/sont disposé(s) dans une paroi isolante de l'appareil de cuisson (1), pour un gain de place.

6. Appareil de cuisson selon l'une quelconque des revendications précédentes, **caractérisé en ce que** l'énergie accumulée dans le système d'accumulation et de prélèvement d'énergie (10, 20) sous forme d'énergie thermique, électrique et/ou mécanique dans l'appareil de cuisson peut être particulièrement utilisée pour l'exploitation au moins partielle du chauffage (4), du système de circulation (5) d'une régulation d'humidité, d'un générateur de vapeur (6) et/ou d'une unité de refroidissement, avec la contribution d'un système de mesure et de réglage (7, 8, 9, 17, 26a, 26b).

7. Appareil de cuisson selon l'une quelconque des revendications précédentes, **caractérisé en ce que** de l'énergie peut être prélevée par convection dans le système d'accumulation et: de prélèvement d'énergie (10, 20), particulièrement par l'intermédiaire d'au moins une surface thermoconductrice (10^{e}, 25c).

8. Appareil de cuisson selon l'une quelconque des revendications précédentes, **caractérisé en ce que** de l'énergie peut être prélevée sur les parois chaudes du système d'accumulation et de prélèvement d'énergie (10, 20), par étranglement et/ou par compression, de préférence de vapeur, présente sous forme de premier matériau, par adjonction d'eau et/ou par évaporation d'eau, en particulier pour l'évaporation d'eau et/ou pour le chauffage d'un procédé de cuisson.

9. Appareil de cuisson selon l'une quelconque des revendications précédentes, **caractérisé en ce que** de l'énergie peut être prélevée sur le système d'accumulation et de prélèvement d'énergie (10, 20) par expansion et/ou par détente, de préférence d'un agent présent sous forme de second matériau, en particulier pour le refroidissement du compartiment de cuisson, pour la congélation du produit de cuisson, avant et/ou après la cuisson et/ou pour l'élimination par condensation de la buée présente dans le compartiment de cuisson.

10. Appareil de cuisson selon l'une quelconque des revendications précédentes, **caractérisé en ce que** le système de mesure et de réglage (7, 8, 9, 17, 26a, 26b) garantit constamment la toute première priorité au maintien du procédé de cuisson.
